# EUROPEAN PATENT SPECIFICATION

(11) **EP 1 509 438 B1**
(45) Date of publication and mention of the grant of the patent: **26.03.2008**
(21) Application number: 03730968.9
(22) Date of filing: 03.06.2003
(51) Int. Cl.: B62D 53/00

(54) **CROSS-COUNTRY VEHICLE**
GELÄNDEFAHRZEUG
VEHICULE TOUT TERRAIN

(30) Priority: 03.06.2002 SE 0201663
(43) Date of publication of application: 02.03.2005
(73) Proprietor: Forestline Skogsmaskiner AB, 894 93 Överhörnäs (SE)
(72) Inventor: BERGSTRÖM, Nicklas, S-894 93 Överhörnäs (SE)
(74) Representative: Onn, Thorsten
(86) International application number: PCT/SE2003/000896
(87) International publication number: WO 2003/101811

(56) References cited:
- EP-A2- 1 254 827
- FR-A- 682 625
- SE-B- 469 772
- US-A- 4 106 791
- US-A- 4 470 475
- US-A- 4 817 728
- US-A- 5 823 270
- US-A1- 2002 069 629

## Description

The present invention concerns a cross-country vehicle such as a forestry machine as described in the preamble to claim 1.

Cross-country vehicles such as forestry machines with one or two chassis sections mounted so they can rotate relative to each other are previously known. On both chassis sections are arranged a rotating attachment and a means of achieving so-called steerable articulation. This provides better accessibility in difficult terrain. The front and rear chassis sections respectively follow the lay of the land while the articulated joint acts as a connecting link.

From US 4 470 475, according the preamble features of claim 1, an articulated cross-country vehicle is known. It comprises a hydraulic motor-driven two-unit forest tractor which includes a power unit suspended on a first bogie, and a load carrying trailer unit, suspended on a second bogie. The trailer unit is coupled to the power unit by means of a drawhook. The drawhook is constructed so that it permits a pivoting of the two vehicle units in relation to each other around a shaft disposed in the drawhook, that is positioned vertically in the neutral position. The drawhook, as well, permits turning of the two vehicle units in relation to each other around the longitudinal axis of the drawhook, but does not permit a pivoting in the vertical plane. Two hydraulic pumps drive two hydraulic motors coupled in parallel, one motor on each bogie respectively, each motor being arranged to drive a wheel pair. When turning of the vehicle, e.g., to the left is to be accomplished, the wheel pair on one side of the first unit and the wheel pair on the second sida of the second unit is maneuvered, thereby turning the vehicle. This way of steering the vehicle prevent the user to disconnect the front unit from the second unit and drive the front unit separately, since the steering is made by the hydraulic cooperation between the two units.

Forestry work often means there is a harvester and a forwarder within the same felling tract, where the harvester fells and trims the trees and the forwarder gathers together and transports the trunks. This means that during minor felling work, the forwarder will have to stand and wait until the harvester has had time to process a quantity of trunks that are to be transported away. This is an uneconomic way of running a forestry operation from the point of view of machine costs as well as labour costs.

The object of the present invention is therefore to achieve a cross-country vehicle with a first engine-bearing chassis section and a second tool-carrying chassis section of the type that is so arranged that it has an increased degree of use and provides the possibility of rapid adaptation to current working conditions with the operator only needing to switch the tool-carrying chassis section without being forced to switch machine completely while also allowing the first engine-bearing chassis section to be driven separately. Another object of the invention is to achieve a means of coupling between the different chassis sections that allows simple switching of the tool-carrying chassis section to another with a suitable tool.

These objects of the invention can be achieved with a cross-country vehicle exhibiting the distinctive features and characteristics specified in the claims.

The invention is described more fully in the following with reference to the attached drawings, which illustrate examples of selected embodiments, where
fig. 1 shows a cross-country vehicle according to the invention
fig. 2 shows a view of the passive part contained in the coupling means.
fig. 3 shows an exploded view of the active part contained in the coupling means.

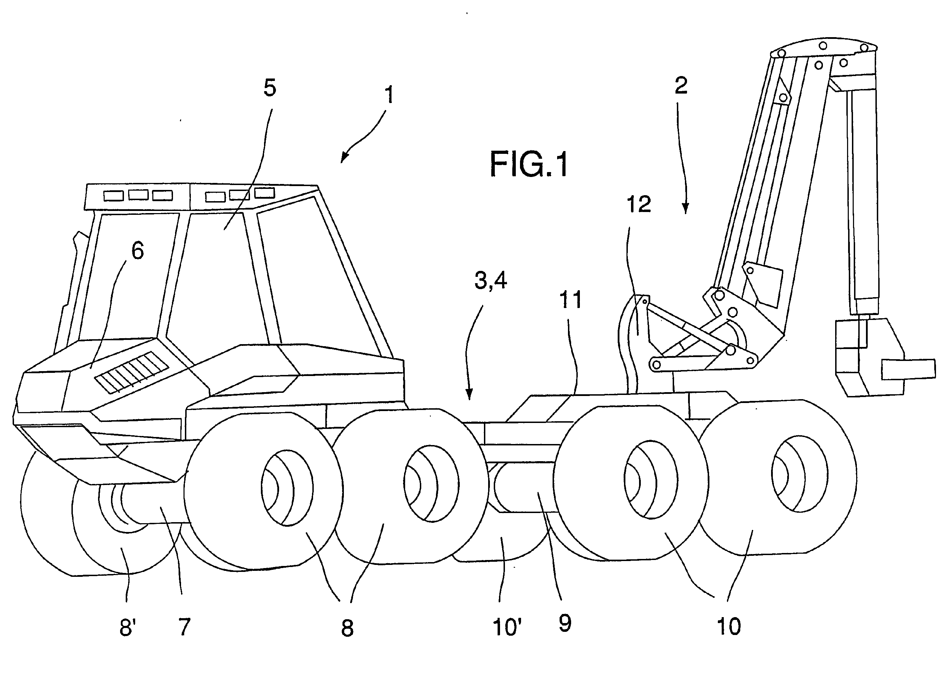

With reference to figure 1, a cross-country vehicle according to the invention comprises a first 1 and a second 2 chassis section to which a pivot shaft 3 perpendicular to the longitudinal axis of the vehicle and a means of coupling 4 are arranged, which together form a link between chassis sections 1 and 2 and prevent rotation in the longitudinal axis of the vehicle but can rotate around an axis perpendicular to the longitudinal axis of the vehicle and allow a pendulum motion around the longitudinal axis. The rigid link provides the vehicle with characteristics that are already known in steerable articulated cross-country vehicles equipped with front and rear chassis sections, such as forestry machines. To the first chassis section 1 is arranged a driver's cab 5 and an engine unit 6. The engine in this case is an internal combustion engine intended to drive the vehicle forward through separate hydraulic motors arranged to each wheel axle or to each wheel. Other means of propelling the vehicle are of course possible, such as a gearbox. To the engine unit 6 is also arranged hydraulic equipment comprising pumps and valves (not shown) intended to operate the machine as a tool carrier. To chassis section 1 is arranged two means of suspending a wheel bogie 7, 7', each with one pair of wheels 8, 8'.

The second chassis section 2 comprises two means of suspending a wheel bogie 9, 9', each with one pair of wheels 10, 10' and on its top a base 11 to which is arranged a bracket 12 for carrying equipment such as a crane arm or other suitable tool. In another embodiment, the second chassis section is arranged with side pieces for carrying and retaining a load of timber during transport or other tools commonly used for forestry or line work purposes. The wheel pairs' 8, 8', 10, 10' bogie suspension 7, 7', 9, 9' are intended to move the cross-country vehicle in a smooth manner over the crown of a hill through high ground clearance, large wheels 8, 8', 10, 10' and that the respective wheel bogie 7, 7', 9, 9' exhibits a large distance between each respective end position of its spring travel.

Linking together the first 1 and second 2 chassis sections forms a cross-country steerable articulated vehicle with the same characteristics as a conventional forestry tractor. The coupling means 4, which in this case is locked to prevent the two chassis sections from rotating along the longitudinal axis of the vehicle but allowing a pendulum motion between the chassis sections along the said longitudinal axis and a pivoting motion around an axis perpendicular to the longitudinal axis, acts as a steerable articulated joint and can be controlled principally with two hydraulic cylinders (not shown) arranged between the first chassis section 1 and the coupling means 4. The first 1 and second 2 chassis sections have all-wheel-drive wherein the second chassis section 2 is provided with traction via hydraulic hoses connected to the drive motors. With the two chassis sections linked together, the wheel drive can be controlled via so-called communicating vessels through a computerised control program that adapts the rotation of the wheels in relation to the radius through which the vehicle is turning. Communicating vessels in this respect means for example that during a left turn, the left pair of wheels on the first chassis section 1 communicates with the right pair of wheels on the second chassis section 2 and adapts the rotation of the wheels to each other depending on the radius of the turn. This means that when the chassis sections are turning in relation to each other while the vehicle is stationary, the wheel pairs will rotate in such a way that the ground will not be disturbed due to the vehicle being stationary but the wheels will rotate in combination with the movement to avoid ground damage.

When both chassis sections are uncoupled, i.e. the coupling means is in its open, unlocked position and the hydraulic hoses are disconnected, the first engine-bearing chassis section 1 can be operated and manoeuvred for connecting to another tool-carrying chassis section. At this point, a second computerised control program is used to switch the drive to the wheels, whereby the vehicle can be steered by rotating the wheels in different directions for turning. The control program can be chosen by the driver but can also be automated through sensors arranged, for example, to the coupling means which detect whether the first chassis section is connected to a second chassis section. After disconnecting the tool-carrying chassis section, its coupling end will rest on the ground or on a support that gives the chassis section an essentially horizontal resting position.

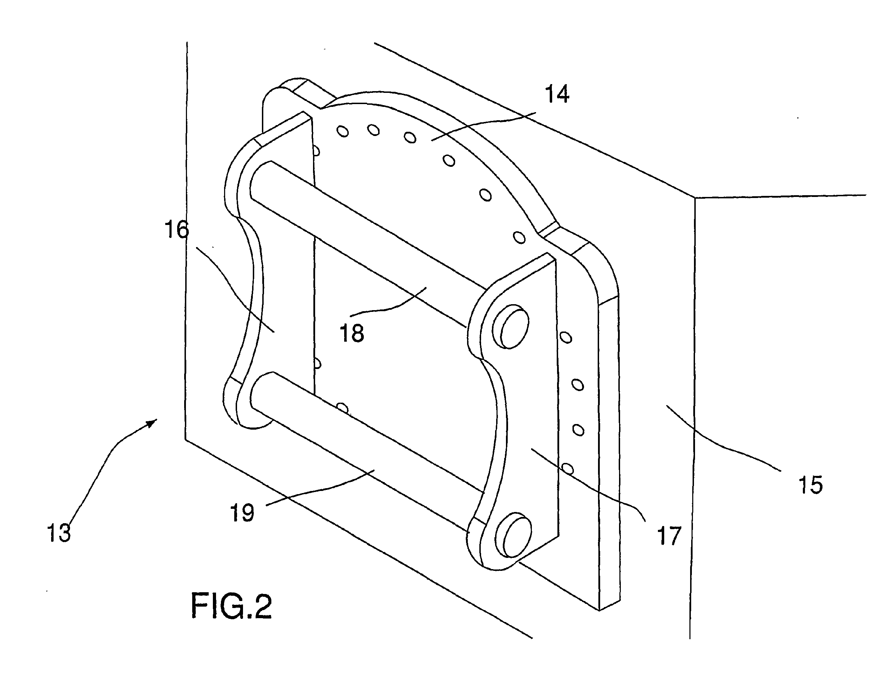

Figure 2 shows the passive part 13 of a claw-like means of coupling 4. A first vertical bottom plate 14 is bolted with several bolts to the vertical front end of the second chassis section 2 seen in the normal direction of travel. To the bottom plate 14 is arranged a pair of vertical attachment lugs 16, 17 parallel to each other and at a relative distance from each other. Between the attachment lugs 16, 17 is arranged a pair of essentially horizontal transverse rods 18, 19, one between the upper parts and one between the lower parts of the said attachment lugs 16, 17. The rods 18, 19 are intended to constitute fastening points for a corresponding part of the coupling means 4 found on the first chassis section 1.

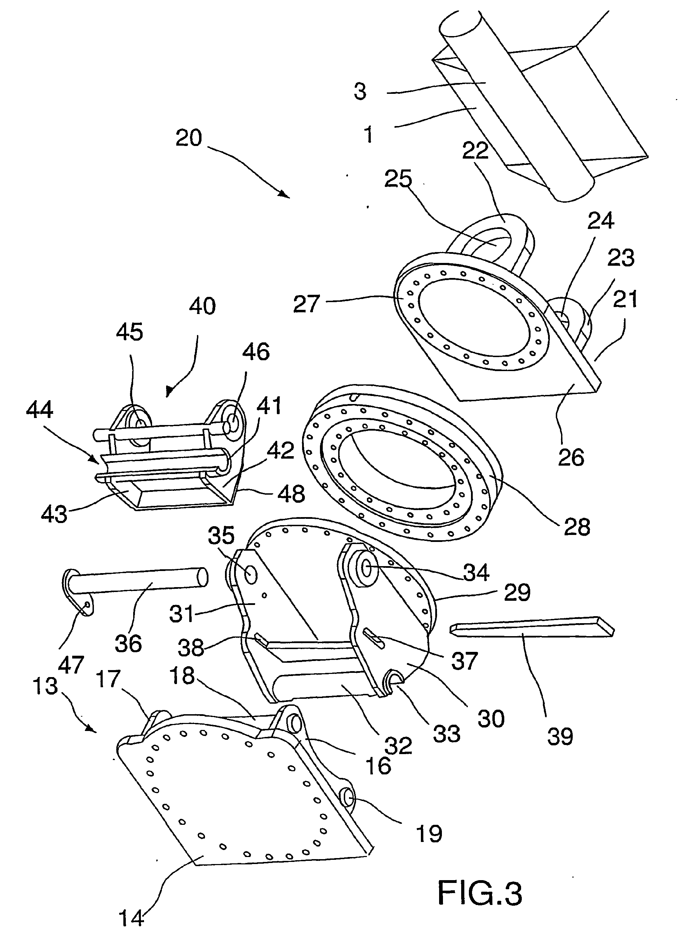

The first chassis section 1 is arranged with a shaft 3 perpendicular to the longitudinal axis of the vehicle, pivoting around which shaft 3 is arranged the corresponding active part 20 of the coupling means 4. As shown in figure 3, the active part 20 comprises a second vertical bottom plate 21, to which a pair of horizontal attachment plates 22, 23 are arranged. The horizontal attachment plates 22, 23 exhibit through holes 24, 25 with bearings, through which the vertical shaft 3 is intended to be inserted, whereby the active part 20 is arranged to pivot around the vertical shaft 3. The distance between the centre axis of the pivot shaft 3 and the point of separation between both chassis sections 1, 2 is adapted to give as short hose routing as possible. The hose routing in this respect is the coupling between the hydraulic components of both chassis sections 1, 2.

The opposite side 26 of the second vertical bottom plate 21exhibits a circular mating surface 27, to which one side of a pivoting slew ring bearing 28 of common type is arranged. The slew ring bearing 28 is intended to allow a pendulum motion rotating around the longitudinal axis of the vehicle, which arises through the inclination of both chassis sections 1, 2 caused by the terrain and at the same time act as a connecting link. To the other side of the slew ring bearing 28 is arranged a base plate 29 with essentially the same outside diameter as the slew ring bearing 28. The side of the base plate 29 facing away from the slew ring bearing 28 is arranged with a pair of outer vertical attachment plates 30, 31 at a distance from each other and with an essentially triangular shape with its base arranged on the base plate 29. Between the outer attachment plates 30, 31, at the points of the attachment plates, is arranged a split tube 32 with its opening 33 pointing down at an oblique angle and constituting the claw-like coupling means. The tube 32 has been given an inside diameter somewhat larger than the diameter of the rods 18, 19 that constitute the attachment points on the second chassis section 2.

In conjunction with the upward pointing corner of each outer attachment plate 30, 31, as shown in figure 3, in conjunction with the outer attachment plate's connection to the base plate 29, are arranged holes 34, 35 to receive a shaft 36. To each outer attachment plate 30, 31, at a suitable distance between the attachment points of the tube 32 and the holes 34, 35, are arranged openings 37, 38 for inserting a wedge 39. The wedge 39 is intended to secure a third active part 40 of the claw-like coupling means.

As shown in figure 3, the third active part 40 in a similar way comprises a split tube 41 arranged on the bottom edge of a pair of inner attachment plates 42, 43 with its opening 44 pointing up at an angle. The inner attachment plates 42, 43 are arranged at a distance from each other that is slightly less than the distance between the outer attachment plates 30, 31 on the other active coupling part 20. The tube 41 opening 44 is arranged when the third part 40 is in locked position to point up at an angle and be essentially engaged in the upper 18 of the two transverse horizontal rods 18, 19. To one edge of the inner attachment plates 42, 43 are arranged a pair of holes 45, 46 for the shaft 36 corresponding with the holes 34, 35 in the outer attachment plates 30, 31. The inner attachment plates 42, 43 of the third part 40 are fitted in between the outer attachment plates 22, 23 of the second part 20 and the holes 34, 35, 45, 46 are aligned with each other, after which the shaft 36 is inserted through the holes and secured with a bolt 47. In this way, the shaft 36 acts as a joint between the second 20 and the third 40 coupling parts. The opposite side of the inner attachment plates 42, 43 seen from the tube 41 has been arranged with a sliding surface 48. The sliding surface 48 is intended to act as a support for the wedge 39 when it is driven through the intended openings 37, 38 to drive the second 20 and third 40 parts to a position with the tubes' 32, 41 openings 33, 44 at their greatest distance from each other.

The arrangement works as follows: The first chassis section 1 is arranged with the active part 20 of the coupling means 4 and the second chassis section is arranged with the passive part 13. When coupling the two chassis sections 1, 2, the front chassis section 1 is manoeuvred with the coupling 13 towards the coupling 20, 40 on the rear chassis section 2. The end of the front chassis section 1 with the coupling is lowered using hydraulic cylinders arranged between the wheel bogie and the chassis to a position where the second active coupling part's 20 lower tube opening 33 grips the bottom one of the horizontal transverse rods 18, 19 on the first passive coupling part 13. With the help of the wheel bogie hydraulic cylinders, the second chassis section is lifted up to a position where both chassis sections are essentially horizontal. The third part 40 of the coupling means is then rotated around the shaft 36 so that the tube opening 44 grips the top one of the transverse rods 18, 19. In this position, the wedge openings 37, 38 on the second 20 coupling part is essentially aligned with the third part's 40 sliding surface and the wedge 39 can be driven into the openings 37, 38. Hereby, the second 20 and third 40 coupling parts are driven apart, the open tubes 32, 41 lock around the transverse rods 18, 19 and the third part 40 is put into a locked end position. Subsequently, the various hydraulic hoses are connected to each other to drive the second chassis section and the tool. The hoses can be arranged with quick-release couplings of the type where the male hose parts and the female hose parts respectively are arranged in a pair of block halves for rapid and secure connections of all the coupling pieces simultaneously. The length of the horizontal attachment plates 22, 23, i.e. the distance between the coupling points and the joint are so adapted to allow as short hose routing as possible. The second chassis section can be disconnected from the first chassis section in reverse order, after which the engine-bearing chassis section can be driven and manoeuvred to another position for connecting to another second chassis section with the required tool.

The type of coupling described in detail above is only mechanically active. In another embodiment, the rotation of the second active coupling part and the lock for the first passive coupling part is fluid activated, which makes it possible for the driver, irrespective of the gradient of the ground, to position the front chassis section for rapidly and easily switching the rear chassis section.

## Claims

1. Cross-country vehicle, for example a forestry machine, supported on wheels (8, 10), tracks or similar means of driving, comprising a first and a second chassis section (1, 2) arranged to swing in relation to each other, of which the first chassis section (1) exhibits an engine unit (6) and the second chassis section (2) exhibits a unit (12) on which tools can be arranged, **characterised in that** the first chassis section (1) is able to be driven while the sections (1,2) are not coupled together, that the first chassis section (1) is fitted with a first means of coupling (13) and that the second chassis section (2) is fitted with a second means of coupling (20, 40) to form a detachable locking quick-action fastening (4) rigid in relation to the rotation between the chassis sections (1,2) in a longitudinal axis of the vehicle, whereby the first chassis section (1) is manoeuvred to the second chassis section (2) for connecting the respective coupling means (13, 20, 40) and in a combined form make up a steerable articulated vehicle.

2. Cross-country vehicle according to claim 1, whereby the second chassis section (2) is fitted with a means of driving, which, when the chassis sections (1, 2) are connected together via means of conveying power, is powered by the engine unit (6) on the first chassis section (1).

3. Cross-country vehicle according to any one of the previous claims, whereby the second chassis section (2) tool, when the chassis sections (1, 2) are connected together via a means of conveying power, is powered by the engine unit (6) on the first chassis section (1).

4. Cross-country vehicle according to claims 2 and 3, whereby the power supply is conveyed from the first (1) to the second chassis section (2) via hydraulic quick-release couplings.

5. Cross-country vehicle according to any one of the previous claims, whereby it includes a first control program for driving with the first chassis section (1) when the chassis sections (1, 2) are not connected together and at least one other control program for driving with the two chassis sections (1, 2) joined together.

6. Cross-country vehicle according to any one of the previous claims, whereby it includes a pair of wheel bogies (7) arranged to the sides of each of the chassis sections (1, 2), on which the wheels (8, 10) are arranged.

7. Cross-country vehicle according to claim 1, whereby the quick-action fastener (4) comprises means (3, 22, 23, 28) that allow a relative pendulum motion between the respective chassis sections (1, 2) around an axis that is parallel with the longitudinal axis of the vehicle and the rotation of the chassis sections (1, 2) around an axis that is perpendicular to the longitudinal axis of the vehicle.

8. Cross-country vehicle according to claim 7, whereby the quick-action fastener (4) comprises a first passive coupling part (13) that is removably secured to a second (20) and a third active coupling part (40).

9. Cross-country vehicle according to claim 8, whereby the second active coupling part's (20) means (3, 22, 23) of rotating the chassis sections (1, 2) around the axis perpendicular to the longitudinal axis of the vehicle comprises a pair of attachment plates (22, 23) with openings (24, 25) through which is arranged an essentially vertical shaft (3) arranged to at least one of the chassis sections (1).

10. Cross-country vehicle according to claims 7 - 9, whereby the quick-action fastener's (4) means of allowing a relative pendulum motion between the chassis sections comprises a slew ring bearing (28) arranged on the second active coupling part (20).

11. Cross-country vehicle according to claim 8, whereby the passive coupling part (13) comprises a pair of essentially horizontal parallel rods (18, 19) arranged at a relative distance to each other.

12. Cross-country vehicle according to claim 8, whereby the third active part (40) is via a horizontal shaft (36) arranged to pivot on the second active part (20).

13. Cross-country vehicle according to any one of the claims 8 -12, whereby the second (20) and third (40) active coupling parts each comprise a tube (32, 41) with essentially the same inner diameter as the rods (18, 19), the rods comprising openings (33, 44) extending along the length of the tubes (32, 41) intended to interact with the first passive coupling part's (13) rods (18, 19).

14. Cross-country vehicle according to any one of the claims 8 -13, whereby the quick-action fastener (4) comprises a wedge (39) intended to drive the third active part (40) to its end secured position with the second active part (20), in which end position the tubes (32, 41) are engaged with the rods (18, 19).

15. Cross-country vehicle according to claims 8 -14, whereby the third active part (40) is manoeuvred to its secured end position together with the second active part (20) by the activation of a piston-cylinder device.

16. Cross-country vehicle according to any one of the previous claims, whereby the second active part (20) is turned around the longitudinal axis of the vehicle to a position that engages with the first passive part (13) through the action of a fluid-activated slew ring bearing (28).

## Patentansprüche

1. Geländefahrzeug, beispielsweise eine Forstmaschine, auf Rädern (8, 10), Raupen oder ähnlichen Antriebsmitteln, mit einem ersten und einem zweiten Fahrgestellteil (1, 2), welche schwenkbar zueinander angeordnet sind, wovon der erste Fahrgestellteil (1) eine Motoreinheit (6) aufweist und der zweite Fahrgestellteil (2) eine Einheit (12) aufweist, auf der Werkzeuge anbringbar sind, **dadurch gekennzeichnet, dass** der erste Fahrgestellteil (1) fahrbar ist, während die Teile (1, 2) nicht miteinander gekuppelt sind, dass der erste Fahrgestellteil (1) mit einem ersten Kupplungsmittel (13) und der zweite Fahrgestellteil (2) mit einem zweiten Kupplungsmittel (20, 40) versehen ist, um eine lösbare, blockierende Schnellkupplung (4) zu bilden, die bezüglich der Rotation zwischen den Fahrgestellteilen (1, 2) in einer Längsachse des Fahrzeugs starr ist, wobei der erste Fahrgestellteil (1) zum zweiten Fahrgestellteil (2) gefahren wird, um die jeweiligen Kupplungsmittel (13, 20, 40) zu verbinden und in kombinierter Form ein steuerbares Gelenkfahrzeug zu bilden.

2. Geländefahrzeug nach Anspruch 1, wobei der zweite Fahrgestellteil (2) ein Antriebsmittel aufweist, das von der Motoreinheit (6) auf dem ersten Fahrgestellteil (1) mit Energie versorgt wird, wenn die Fahrgestellteile (1, 2) über Energieversorgungsmittel miteinander verbunden sind.

3. Geländefahrzeug nach einem der vorstehenden Ansprüche, wobei das Werkzeug des zweiten Fahrgestellteils (2) von der Motoreinheit (6) auf dem ersten Fahrgestellteil (1) mit Energie versorgt wird, wenn die Fahrgestellteile (1, 2) über ein Energieversorgungsmittel miteinander verbunden sind.

4. Geländefahrzeug nach den Ansprüchen 2 und 3, wobei die Energiezufuhr vom ersten (1) zum zweiten Fahrgestellteil (2) über hydraulische Schnellkupplungen erfolgt.

5. Geländefahrzeug nach einem der vorstehenden Ansprüche, wobei es ein erstes Steuerungsprogramm aufweist zum Fahren mit dem ersten Fahrgestellteil (1), wenn die Fahrgestellteile (1, 2) nicht miteinander verbunden sind, und mindestens ein weiteres Steuerungsprogramm zum Fahren mit den beiden miteinander verbundenen Fahrgestellteilen (1 , 2).

6. Geländefahrzeug nach einem der vorstehenden Ansprüche, wobei es jeweils ein Paar seitlich an jedem der Fahrgestellteile (1, 2) angeordnete Radsätze (7) aufweist, an denen die Räder (8, 10) angeordnet sind.

7. Geländefahrzeug nach Anspruch 1, wobei die Schnellkupplung (4) Mittel (3, 22, 23, 28) aufweist, die eine relative Pendelbewegung zwischen den jeweiligen Fahrgestellteilen (1, 2) um eine parallel zur Längsachse des Fahrzeugs verlaufende Achse gestatten, sowie die Rotation der Fahrgestellteile (1, 2) um eine senkrecht zur Längsachse des Fahrzeugs stehende Achse.

8. Geländefahrzeug nach Anspruch 7, wobei die Schnellkupplung (4) einen ersten passiven Kupplungsteil (13) aufweist, der lösbar an einem zweiten (20) und einem dritten, aktiven Kupplungsteil (40) befestigt ist.

9. Geländefahrzeug nach Anspruch 8, wobei das Mittel (3, 22, 23) des zweiten, aktiven Kupplungsteils (20) zur Rotation der Fahrgestellteile (1, 2) um die senkrecht zur Längsachse des Fahrzeugs stehende Achse ein Paar Befestigungsplatten (22, 23) mit Öffnungen (24, 25) aufweist, durch die eine an mindestens einem der Fahrgestellteile (1) angeordnete, im wesentlichen senkrechte Achse (3) gesteckt ist.

10. Geländefahrzeug nach den Ansprüchen 7 bis 9, wobei das Mittel der Schnellkupplung (4), das eine relative Pendelbewegung zwischen den Fahrgestellteilen gestattet, eine am zweiten, aktiven Kupplungsteil (20) angeordnete Drehverbindung (28) beinhaltet.

11. Geländefahrzeug nach Anspruch 8, wobei der passive Kupplungsteil (13) ein Paar im Wesentlichen waagrechte, parallele Stäbe (18, 19) aufweist, die relativ zueinander beabstandet sind.

12. Geländefahrzeug nach Anspruch 8, wobei der dritte, aktive Teil (40) über eine waagrechte Achse (36) am zweiten, aktiven Teil (20) schwenkbar ist.

13. Geländefahrzeug nach einem der Ansprüche 8 bis 12, wobei der zweite (20) und der dritte (40), aktive Kupplungsteil jeweils ein Rohr (32, 41) mit im Wesentlichen gleichem Innendurchmesser wie die Stäbe (18, 19) aufweisen, wobei die Stäbe längs den Rohren (32, 41) verlaufende Öffnungen (33, 44) aufweisen, die dazu vorgesehen sind, mit den Stäben (18, 19) des ersten passiven Kupplungsteils (13) zusammenzuwirken.

14. Geländefahrzeug nach einem der Ansprüche 8 bis 13, wobei die Schnellkupplung (4) einen Keil (39) aufweist, der dazu vorgesehen ist, den dritten, aktiven Teil (40) in seine gesicherte Endstellung mit dem zweiten, aktiven Teil (20) zu bringen, in welcher Endstellung die Rohre (32, 41) mit den Stäben (18, 19) im Eingriff stehen.

15. Geländefahrzeug nach den Ansprüchen 8 - 14, wobei der dritte, aktive Teil (40) in seine gesicherte Endstellung zusammen mit dem zweiten, aktiven Teil (20) durch Aktivieren einer Kolben-Zylinder-Vorrichtung gebracht wird.

16. Geländefahrzeug nach einem der vorstehenden Ansprüche, wobei der zweite, aktive Teil (20) durch die Wirkung eines fluidbetätigten Schwenkringlagers (28) um die Längsachse des Fahrzeugs in eine Eingriffsstellung mit dem ersten passiven Teil (13) gedreht wird.

## Revendications

1. Véhicule tout terrain, par exemple une machine forestière, sur roues (8, 10), chenilles ou moyens d'entraînement similaires, comprenant une première et une deuxième partie de châssis (1, 2) agencées de manière orientable l'une par rapport à l'autre, dont la première partie de châssis (1) présente un groupe moteur (6) et la deuxième partie de châssis (2) présente une unité (12) sur laquelle peuvent être agencés des outils, **caractérisé en ce que** la première partie de châssis (1) peut être manoeuvrée alors que les parties (1, 2) ne sont pas accouplées entre elles, que la première partie de châssis (1) est munie d'un premier moyen d'accouplement (13) et que la deuxième partie de châssis (2) est munie d'un deuxième moyen d'accouplement (20, 40) afin de former un accouplement rapide (4) bloquant détachable, rigide par rapport à la rotation entre les parties de châssis (1, 2) dans un axe longitudinal du véhicule, la première partie de châssis (1) étant manoeuvrée vers la deuxième partie de châssis (2) afin de relier les moyens d'accouplement (13, 20, 40) respectifs et de constituer dans une forme combinée un véhicule articulé dirigeable.

2. Véhicule tout terrain selon la revendication 1, où la deuxième partie de châssis (2) est munie d'un moyen d'entraînement qui, lorsque les parties de châssis (1, 2) sont reliées entre elles par des moyens d'acheminement d'énergie, est alimenté par le groupe moteur (6) sur la première partie de châssis (1).

3. Véhicule tout terrain selon l'une quelconque des revendications précédentes, où l'outil de la deuxième partie de châssis (2), lorsque les parties de châssis (1, 2) sont reliées entre elles par un moyen d'acheminement d'énergie, est alimenté par le groupe moteur (6) sur la première partie de châssis (1).

4. Véhicule tout terrain selon les revendications 2 et 3, où l'énergie alimentée est acheminée de la première (1) à la deuxième partie de châssis (2) par des raccords rapides hydrauliques.

5. Véhicule tout terrain selon l'une quelconque des revendications précédentes, où il comprend un premier programme de commande pour rouler avec la première partie de châssis (1) lorsque les parties de châssis (1, 2) ne sont pas reliées entre elles et au moins un autre programme de commande pour rouler avec les deux parties de châssis (1, 2) jointes l'une à l'autre.

6. Véhicule tout terrain selon l'une quelconque des revendications précédentes, où il comprend une paire de bogies (7) à roues, agencés sur les côtés de chacune des parties de châssis (1, 2), sur lesquels sont agencées les roues (8, 10).

7. Véhicule tout terrain selon la revendication 1, où l'accouplement rapide (4) comprend des moyens (3, 22, 23, 28) qui permettent un mouvement pendulaire entre les parties de châssis (1, 2) respectives autour d'un axe qui est parallèle à l'axe longitudinal du véhicule et la rotation des parties de châssis (1, 2) autour d'un axe qui est perpendiculaire à l'axe longitudinal du véhicule.

8. Véhicule tout terrain selon la revendication 7, où l'accouplement rapide (4) comprend une première partie d'accouplement (13) passive qui est fixée de manière amovible à une deuxième (20) et une troisième partie d'accouplement (40) actives.

9. Véhicule tout terrain selon la revendication 8, où le moyen (3, 22, 23) de la deuxième partie d'accouplement (20) active pour la rotation des parties de châssis (1, 2) autour de l'axe perpendiculaire à l'axe longitudinal du véhicule comprend une paire de plaques d'attelage (22, 23) munies d'ouvertures (24, 25) par lesquelles passe un axe (3) essentiellement vertical agencé sur l'une au moins des parties de châssis (1).

10. Véhicule tout terrain selon les revendications 7 à 9, où le moyen de l'accouplement rapide (4) qui permet un mouvement pendulaire relatif entre les parties de châssis comprend un roulement à couronne d'orientation (28) agencé sur la deuxième partie d'accouplement (20) active.

11. Véhicule tout terrain selon la revendication 8, où la partie d'accouplement (13) passive comprend une paire de barres (18, 19) parallèles essentiellement horizontales agencées à une distance relative entre elles.

12. Véhicule tout terrain selon la revendication 8, où la troisième partie active (40) peut pivoter sur la deuxième partie active (20) par l'intermédiaire d'un axe (36) horizontal.

13. Véhicule tout terrain selon l'une quelconque des revendications 8 à 12, où la deuxième (20) et la troisième (40) partie d'accouplement actives comprennent chacune un tube (32, 41) ayant essentiellement le même diamètre intérieur que les barres (18, 19), les barres présentant des ouvertures (33, 44) qui s'étendent le long des tubes (32, 41) et destinées à interagir avec les barres (18, 19) de la première partie d'accouplement (13) passive.

14. Véhicule tout terrain selon l'une quelconque des revendications 8 à 13, où l'accouplement rapide (4) comprend une cale (39) destinée à chasser la troisième partie active (40) dans sa position extrême fixé à la deuxième partie active (20), dans laquelle position extrême les tubes (32, 41) sont en engagement avec les barres (18, 19).

15. Véhicule tout terrain selon les revendications 8 à 14, où la troisième partie active (40) est manoeuvrée dans sa position extrême fixée conjointement avec la deuxième partie active (20) par l'actionnement d'un dispositif piston-cylindre.

16. Véhicule tout terrain selon l'une quelconque des revendications précédentes, où la deuxième partie active (20) est tournée autour de l'axe longitudinal du véhicule dans une position d'engagement avec la première partie passive (13) par l'action d'un roulement à couronne d'orientation (28) actionné par fluide.
